# EUROPEAN PATENT SPECIFICATION

(11) **EP 2 849 393 B1**
(45) Date of publication and mention of the grant of the patent: **28.08.2019**
(21) Application number: 12880171.9
(22) Date of filing: 29.06.2012
(51) Int. Cl.: H04L 12/865, H04L 12/851, H04L 12/811, H04L 29/06, H04N 19/37

(54) **METHOD AND DEVICE FOR TRANSMITTING VIDEO DATA**
VERFAHREN UND VORRICHTUNG ZUR ÜBERTRAGUNG VON VIDEODATEN
PROCÉDÉ ET DISPOSITIF DE TRANSMISSION DE DONNÉES VIDÉO

(43) Date of publication of application: 18.03.2015
(73) Proprietor: Huawei Technologies Co., Ltd., Longgang District Shenzhen, Guangdong 518129 (CN)
(72) Inventor: CHI, Chen, Shenzhen Guangdong 518129 (CN); BAI, Wei, Shenzhen Guangdong 518129 (CN)
(74) Representative: Goddar, Heinz J.
(86) International application number: PCT/CN2012/077932
(87) International publication number: WO 2014/000278

(56) References cited:
- EP-A2- 1 058 459
- EP-A2- 1 073 275
- CN-A- 101 030 938
- CN-A- 101 610 257
- CN-A- 102 244 608
- US-A- 5 140 417
- US-A- 5 481 312
- US-A1- 2008 273 533
- US-A1- 2009 103 635
- US-A1- 2009 208 122
- US-A1- 2012 013 748

## Description

### TECHNICAL FIELD

The present invention relates to the field of radio communications, and in particular, to a video data transmission method and an apparatus.

### BACKGROUND

Scalable video coding (Scalable Video Coding, SVC) is one of existing video data coding mechanisms, and is characterized by capability of coding an original video into a video stream that is scalable/can be layered. The SVC video stream has one basic layer and several enhancement layers. A receiving terminal, when a channel bandwidth is limited, needs to receive only the basic layer to decode and restore a video file that meets basic quality as, for example, explained in EP 1 058 459 A2. When the channel bandwidth is sufficient, it may be considered to receive the enhancement layers to decode and obtain a high quality video file. The SVC video stream is suitable to be applied in an LTE system, so that the LTE system can better transmit video data. The LTE system performs differentiated transmission of the SVC video stream according to different priorities of the basic layer and the enhancement layers, to improve experience of a user terminal.

In the prior art, this technology needs to perform a DPI inspection on each data packet, thereby causing intensive calculation and delay. For video data that adopts a proprietary protocol and DRM protection, a channel cannot be inspected through a DPI technology.

US 2009/103635 A1 discloses a transmitter system comprising an interface operative to receive compressed video data for a group of pictures, each picture containing picture subsets; a data prioritization engine operative to define a priority level of each picture subset, the priority level being based on a picture contribution value of the picture subset; and a packet generation engine operative to generate a group of message packets, the group containing at least a portion of the picture subsets belonging to a particular priority level, and operative to generate parity packets corresponding to the group of message packets, the number of parity packets being based on the particular priority level. The transmitter system may further comprise a hybrid ARQ/FEC engine operative to await an ACK in response to communication of the message and parity packets, and operative to send at least one additional parity packet if the ACK is not received within a timeout period.

US 2012/013748 A1 discloses capacity and spectrum constrained, multiple-access communication systems that optimize performance by selectively discarding packets. Changes in the communication systems may be driven using control responses. Control responses include intelligent discard of network packets under capacity constrained conditions. Packets are prioritized and discard decisions are made based on the prioritization. Various embodiments provide an interactive response by selectively discarding packets to enhance perceived and actual system throughput, provide a reactive response by selectively discarding data packets based on their relative impact to service quality to mitigate oversubscription, provide a proactive response by discarding packets based on predicted oversubscription, or provide a combination thereof.; Packets may be prioritized for discard using correlations between discards and bandwidth reduction and quality degradation. The quality degradation for video packets may be measured objectively.

### SUMMARY

The present invention provides a data transmission method, so as to enable a base station or a mobile terminal to use a simple manner to obtain priority and size information of a video stream in video transmission data from the obtained video transmission data.

The present invention provides a video data coding method according to claim 1, a video data transmission method according to claim 5, a further video data transmission method according to claim 8, a video data coding apparatus according to claim 10, a video data transmission apparatus according to claim 13 and a further video data transmission apparatus according to claim 15.

Embodiments of the present invention provide a video data transmission method, where auxiliary indication information in a video stream is detected, and priority information and size information of a subsequent stream are obtained, so that a base station can perform differentiated transmission of the video stream based on the obtained priority information and size information, and a handheld terminal can also request, based on the indication information in the received video stream in combination with a current channel resource status, the base station to perform the differentiated transmission of video data, without the need to perform a full DPI inspection on a data packet to obtain information such as a quality layer number, a priority number, and a time layer number, thereby reducing inspection complexity and improving user experience of the terminal.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts. In the following description, embodiments not falling under the scope of the claims are provided only as competitive examples.
FIG. 1 is an architectural diagram of an application system for a video coding method according to an embodiment of the present invention;
FIG. 2 is a flowchart of a video coding method according to an embodiment of the present invention;
FIG. 3 is a flowchart of another embodiment of a video coding method according to an embodiment of the present invention;
FIG. 4 is a status reference diagram of a video coding method according to an embodiment of the present invention;
FIG. 5 is a flowchart of another embodiment of a video data transmission method according to an embodiment of the present invention;
FIG. 6 is a flowchart of another embodiment of a video data transmission method according to an embodiment of the present invention;
FIG. 7 is a schematic structural diagram of a video coding apparatus according to an embodiment of the present invention;
FIG. 8 is a schematic structural diagram of a video data transmission apparatus according to an embodiment of the present invention; and
FIG. 9 is a schematic structural diagram of a video data transmission apparatus according to an embodiment of the present invention.

### DESCRIPTION OF EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Embodiments of the present invention provide a video data transmission method, where auxiliary indication information in a video stream is detected, and priority information and size information of a subsequent stream are obtained, so that a base station can perform differentiated transmission of the video stream based on the obtained priority information and size information, and a handheld terminal can also request, based on the indication information in the received video stream in combination with a current channel resource status, the base station to perform the differentiated transmission of video data, thereby improving user experience of the terminal.

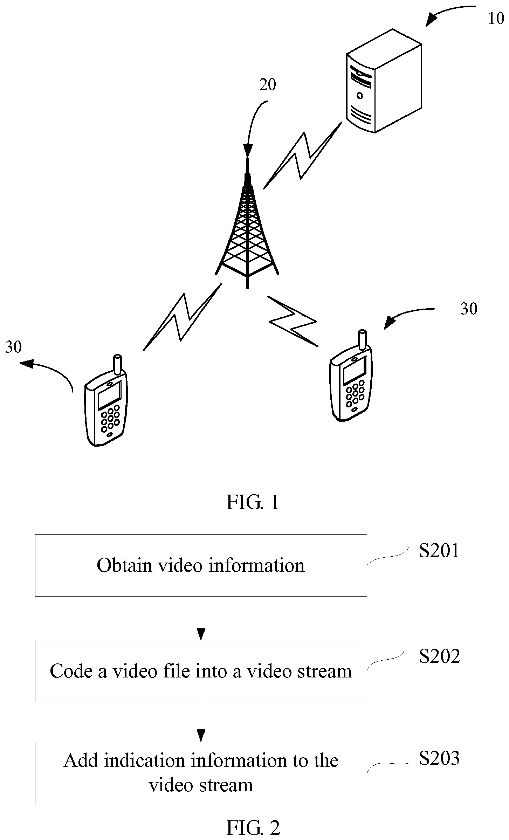

FIG. 1 is a system application architecture diagram of a video transmission method provided by an embodiment of the present invention. As shown in FIG. 1, a system architecture, to which the video transmission method provided by the embodiment of the present invention is applied, includes a video file server sever10, an evolved NodeB eNB20, and several handheld terminals UE30 that access the evolved NodeB 20 through a downlink channel.

The server 10 may include, but not limited to, a network server, and the network server can obtain a video file shot by a user, compress and code the video file, and transmit the coded video file to the evolved NodeB 20; then the evolved NodeB 20 transmits video data to the handheld terminal UE30 through the downlink channel, the handheld terminal 30 decodes the coded video file, and the video file is played on the handheld terminal 30. In the embodiment of the present invention, the network server codes the video file uploaded by the user, and adds indication information to a video stream during coding; the evolved NodeB 20 inspects the video data, and after detecting the indication information, performs differentiated transmission of the video data to the channel based on the priority and/or data packet size information in the indication information; after receiving the indication information, the user terminal 30 can learn an order of the priority and a data packet size of the subsequent video stream, refer to a current channel resource status, and send a differentiated resource request to the base station, improving experience of watching the video file on the user terminal.

FIG. 2 is a flowchart of a video coding method provided by an embodiment of the present invention, and as shown in FIG. 2, the method includes the following steps.

Step S201: Obtain video information.

Specifically, the video information obtained by a server may include, but not limited to, a video file obtained by a user in a manner such as uploading through a camera, downloading from a network, and video capture.

Step S202: Code the obtained video file into a video stream, where the video stream includes data of multiple groups of pictures.

Specifically, a coding apparatus, for example, an encoder, in the server, codes the video file according to a resolution, coding format, coding standard, frame rate, and bit rate that are set, and obtains data of multiple groups of pictures (Group Of Picture, GOP). The coding standard is, for example, the SVC standard in H.264, from which scalable video streams are obtained.

Step S203: Set indication information for the data of the group of pictures, and put the indication information before the corresponding data of the group of pictures, where the indication information is used to indicate a priority and a data amount of each data frame in the corresponding data of the group of pictures.

Specifically, the indication information is added to the coded data of group of pictures, to indicate priorities and sizes of different frames in data of the subsequent group of pictures. In an actual application, one indication information packet may be set for data of each group of pictures data, or the data of the multiple groups of pictures may share one indication information packet.

A space occupied by the indication information is far less than a data packet size. A representation of the indication information may be agreed according to a terminal, a base station, and a server. For example, 00000 indicates that a priority is 1, and 10010 indicates that a priority is 2. The standard for the data packet size is generally that, each IP packet occupies 1.5K bytes; if one subsequent data packet occupies 15K bytes, the data packet size may be displayed as 001010. A field indicating a data packet size may be put behind a field indicating a priority.

In an actual application, indication information may not directly indicate a priority, but a layered information field or a frame coding type field is used to indicate priorities of different data frames in the data of the group of pictures.

After obtaining the video stream, the user terminal or the evolved NodeB can learn the priority and size of a data packet in data of a subsequent group of pictures by obtaining the indication information in a video stream data header, and can perform differentiated transmission of the video data by referring to a current channel status and according to the priority and the data packet size. For example, when channel resources are tight, only a data packet with a higher priority is transmitted, so that a user can obtain the basic video data to meet a basic playing requirement. When the channel resources are sufficient, a data packet with a lower priority is delivered, so that the user can obtain a video playing effect with high quality and definition.

In the video coding method provided by the foregoing embodiment, the indication information is added to the video stream, so that the base station can identify a size and priority of the IP packet and perform the differentiated transmission of the IP packet for the obtained priority without the need to perform a deep inspection on a real application of a data packet in the IP packet at an application layer, thereby reducing complexity and transmission delay, and improving the video watching effect at the user end.

The foregoing embodiment uses the video coding as an example, however, persons skilled in the art should understand that, for audio data coding with a layered coding architecture, the technology provided by the present invention may also be adopted, that is, indication information is used to indicate sizes and an order of priorities of data frames in subsequent audio data, so that a base station can obtain the sizes and the order of priorities of the data frames in the subsequent audio data based on the indication information in an indication information packet, and perform differentiated transmission.

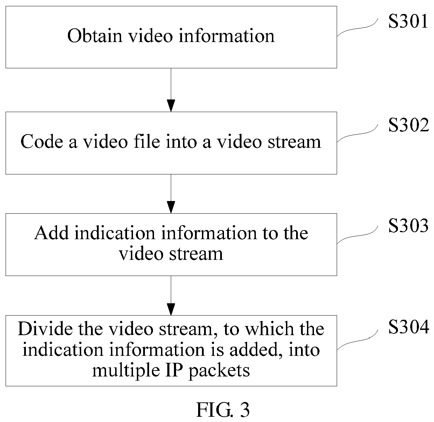

FIG. 3 is a flowchart of another embodiment of a video coding method provided by an embodiment of the present invention, and as shown in the figure, the method includes the following steps.

Step S301: Obtain video information.

Specifically, the video information obtained by a server may include, but not limited to, a video file obtained by a user in a manner such as uploading through a camera, downloading from a network, and video capture.

Step S302: Code the obtained video file into a video stream, where the video stream includes data of multiple groups of pictures.

Specifically, a coding apparatus, for example, an encoder, in the server, codes the video file according to a resolution, coding format, coding standard, frame rate, and bit rate that are set, and obtains data of multiple groups of pictures (Group Of Picture, GOP). The coding standard is, for example, the SVC standard in H.264, from which scalable video streams are obtained.

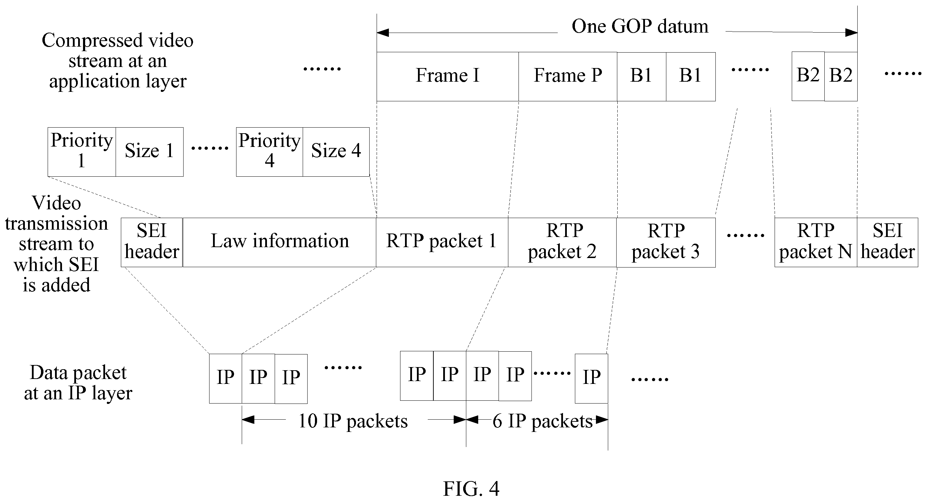

FIG. 4 is a video coding process diagram of a video coding method provided by an embodiment of the present invention, where the embodiment uses transmission of an H.264 SVC video in LTE as an example. Assume that a coding parameter GOP is 8, and a time layer is 4. Flow control is adopted in an encoder for controlling so that a data packet size and a priority at each layer in an obtained coded stream are shown in Table 1, where a coding law of one GOP datum is IPB1B1B2B2B2B2B2, which is repeated, and each type of data frame may act as a real-time transmission protocol packet (Real-time transmission protocol, RTP), as shown in FIG. 4.

**Table 1**

| Time layer | Size (byte) | Priority |
|---|---|---|
| 0 (corresponding to a frame I) | 15k | 1 |
| 1 (corresponding to a frame P) | 9k | 2 |
| 2 (corresponding to a frame B1) | 3k | 3 |
| 3 (corresponding to a frame B2) | 1.5k | 4 |

Step S303: Set indication information for the data of the group of pictures, and put the indication information before the corresponding data of the group of pictures, where the indication information includes a priority and a data amount of each data frame in the corresponding data of the group of pictures.

Specifically, the indication information is added to the coded data of the group of pictures, to indicate priorities and sizes of different frames in data of the subsequent group of pictures. In a format of an indication message shown in Table 2, the priorities and sizes may be arranged sequentially, or several data amount fields identifying the sizes may be arranged after several priority fields.

**Table 2**

| | | | | | | | |
|---|---|---|---|---|---|---|---|
| SEI packet header | Priority 1 | Size 1 | Priority 2 | Size 2 | ... | Priority M | Size M |

Refer to Table 3 in combination with the size and the priority of each data frame in Table 1.

**Table 3**

| | | | | | | | | |
|---|---|---|---|---|---|---|---|---|
| SEI packet header | 1 | 15k | 2 | 9k | 3 | 6k | 4 | 6k |

The indication information shown in Table 3 may be added before a GOP datum, that is, the indication information is added before an RTP packet 1 in the group of RTP packets corresponding to IPB1B1B2B2B2B2B2, to indicate the size and the order of the priority of each RTP packet in a group of RTP packets. A specific identification rule may be determined according to an actual agreement, and reference may be made to description in the foregoing embodiment.

The foregoing embodiment uses the example of setting one indication information packet for data of one group of pictures. Actually, if the data frame sizes and the data frame priorities of data of multiple groups of pictures are the same or similar, one same indication information packet may be shared, and one or more law indication fields may be added to the indication information packet to indicate a law of change of the data frame priorities and the data frame sizes in data of the subsequent group of pictures. For example, a special field bit is used to indicate that the data frame sizes and priorities in data of the subsequent group of pictures are the same as those in data of the first group of pictures.

If multiple law indication fields are added, the laws of the data frames in data of the subsequent multiple groups of pictures can be separately identified.

In an actual application, indication information may not directly indicate a priority, but a layered information field or a frame coding type field is used to indicate priorities of different data frames in data of the group of pictures.

Step S304: Divide the video stream, to which the indication information is added, into multiple IP packets.

Specifically, assume that an IP packet size is 1.5K bytes, and in information about data packets behind an indication information packet, it may be determined, according to a law, that: a priority of 10 IP packets is 1, a priority of 6 IP packets is 2, a priority of 4 IP packets is 3, and a priority of 4 IP packets is 4. By comparison, one indication information packet occupies the number of bytes of only one IP packet or fewer.

Through the foregoing embodiment, a base station can learn a priority and size of each frame in a subsequent group of pictures after receiving a first indication information packet. Disordered IP packets are sorted again according to sequence numbers in RTP packet headers, and differentiated transmission to a channel is performed on different IP packets.

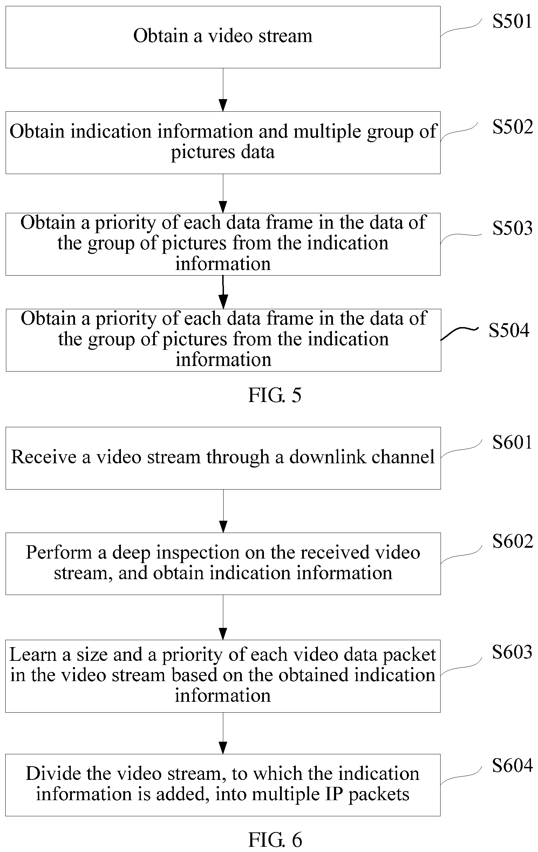

FIG. 5 is a flowchart of an embodiment of a video data transmission method provided by an embodiment of the present invention, and as shown in the figure, the method includes the following steps.

Step S501: Obtain a video stream.

Specifically, a base station obtains, through a network, the coded video stream, for example, H.2264 SVC coded video data, provided by a video file providing network.

Step S502: Perform a deep packet inspection on the obtained video stream, and obtain data of a group of pictures and indication information corresponding to the data of the group of pictures.

Specifically, the base station inspects the obtained video stream that includes multiple IP packets, and sorts the disordered IP packets again. Reference information for sorting the IP packets includes, but not limited to, sequence numbers in RTP packet headers.

Indication information SEI is detected in the received video stream, and priority and data packet size information included in the indication information is identified.

Step S503: Obtain the priority of each data frame in the data of the group of pictures from the indication information.

If the indication information indicates data of multiple groups of pictures at the same time, a law of change of data of the multiple groups of pictures after data of the first group of pictures needs be obtained from the indication information. For example, all data frame priorities and data frame sizes in data of the subsequent group of pictures are the same as those in the data of the first group of pictures.

In an actual application, if indication information adopts a layered information field or a frame coding type field to represent priorities of different data frames in data of the group of pictures, a base station may map the layered information field or the frame coding type field as priority information.

Step S504: Send the data frame in the data of the group of pictures of the video stream according to an order of the priority.

Specifically, after detecting an indication information packet in the video stream, the base station reads the IP packet size and priority information from the indication information packet, and sends the subsequent multiple data packets in a channel according to the order of the priorities. For example, it is determined whether a current channel resource is sufficient by referring to the sizes of the subsequent IP packets in the indication information; if the channel resource is sufficient, the subsequent data packets may be transmitted sequentially without considering the order of the priorities. If the channel resource is insufficient, selectively differentiated transmission of the subsequent IP packets is performed based on a priority indication in the indication information, so that a user terminal can still obtain a video file that meets a basic playing requirement when the channel resource is insufficient.

Through the foregoing embodiment, the base station may obtain the priority and size information of the data packet in the subsequent video stream based on the indication information in the video stream, and perform the differentiated transmission of the data packets based on the different priorities and a channel resource status, thereby preventing the deep packet inspection from being performed on the data of each frame, reducing an inspection frequency, and improving transmission efficiency.

The foregoing embodiment uses the video coding as an example, however, persons skilled in the art should understand that, for audio data coding with a layered coding architecture, the technology provided by the present invention may also be adopted, that is, indication information is used to indicate sizes and an order of priorities of data frames in subsequent audio data, so that a base station can obtain the sizes and the order of priorities of the data frames in the subsequent audio data based on the indication information in an indication information packet, and perform differentiated transmission.

FIG. 6 is a flowchart of a video data transmission method provided by an embodiment of the present invention, and as shown in FIG. 6, the method includes the following steps.

Step S601: Receive a video stream through a downlink channel.

Specifically, a handheld terminal UE receives, in a channel, a video stream below a base station, where the video stream is multiple IP packets, and sorts the IP packets based on sequence numbers in RTP packets after receiving the multiple IP packets.

Step S602: Perform a deep inspection on the received video stream and obtain indication information.

Specifically, the indication information is detected based on a packet header of SEI indication information. Among the multiple data packets, the multiple data packets of a same group of pictures include one indication information packet.

Step S603: Learn a size and a priority of each video data packet in the video stream based on the obtained indication information.

Specifically, the indication information packet includes the priority and size information of multiple RTP data packets. For example, as shown in FIG. 4, the following can be learned from the indication information packet: there are 10 IP packets with the priority being 1 and 6 IP packets with the priority being 2, and correspondingly, the priority of a frame I is 1 and the priority of a frame P is 2. The deep inspection needs to be performed for only once to learn priorities of the data packets in multiple data frames. This is different from an SEI packet indication method in the prior art, where specific priority information of only one certain frame is provided and a deep inspection needs to be performed on each frame.

In an actual application, if indication information adopts a layered information field or a frame coding type field to represent priorities of different data frames in data of a group of pictures, the UE may map the layered information field or the frame coding type field as priority information.

Step S604: Send a resource request to the base station according to a current downlink channel resource and the size and priority of the video data packet.

Specifically, the handheld terminal UE can determine whether the downlink channel resource is sufficient according to the learned data packet size; if the downlink channel resource is sufficient, the handheld terminal UE may adopt no flow control measure; if the downlink channel resource is insufficient, the handheld terminal UE may send a resource request to the base station based on a priority status in the indication information.

Additionally, a channel resource may be requested from the base station based on the size and priority of a subsequent video data packet obtained from the indication information packet. For example, if the channel resource is insufficient, transmission of video data with a higher priority through the channel occupying a small bandwidth may be requested; if the channel resource is sufficient, a resource difference does not need to be considered for the request.

Through the foregoing embodiment, the handheld terminal can learn the priorities and sizes of the different data packets in a subsequent video stream based on the indication information in the obtained video stream, determine whether the current channel resource is sufficient based on the sizes of the data packets, and request the data from the base station according to the priorities when the channel resource is insufficient, preventing the deep inspection from being performed frequently on one data packet and reducing data transmission delay.

The foregoing embodiment uses video coding as an example, however, persons skilled in the art should understand that, for audio data coding with a layered coding architecture, the technology provided by the present invention can also be adopted, that is, indication information is used to indicate sizes and an order of priorities of data frames in subsequent audio data, so that a mobile phone can obtain the sizes and the order of priorities of the data frames in the subsequent audio data based on the indication information in an indication information packet, and perform a differentiated resource request.

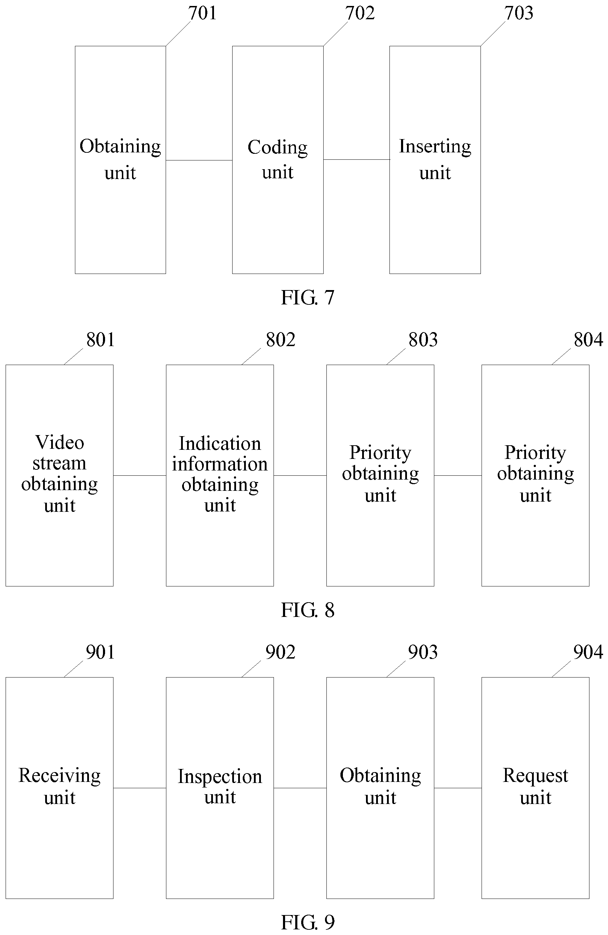

FIG. 7 is a schematic structural diagram of a video coding apparatus provided by an embodiment of the present invention, where the apparatus may specifically be an encoder. As shown in the figure, the apparatus includes:
an obtaining unit 701, configured to obtain video information and send the obtained video information to a coding unit 702;
the coding unit 702, configured to receive the video information obtained by the obtaining unit 701, code the video information into a video stream, and send the video stream to an inserting unit 703, where the video stream includes data of multiple groups of pictures; and
the inserting unit 703, configured to receive the video stream sent by 702 the coding unit, set indication information for the data of the group of pictures in the video stream, and put the indication information before data of the corresponding group of pictures, where the indication information is used to indicate a priority and a data amount of each data frame in the data of the corresponding group of pictures.

The foregoing video coding apparatus is configured to implement the video data coding method in the foregoing embodiment, the units included are classified based only on function logic, and the classification is not limited to the foregoing classification and is acceptable as long as corresponding functions can be implemented; additionally, specific names of functional units are only for easy differentiation from each other, but are not intended to limit the protection scope of the present invention.

FIG. 8 is a schematic structural diagram of a video data transmission apparatus provided by an embodiment of the present invention, the video data transmission apparatus may specifically be a base station, and as shown in the figure, the apparatus includes:
a video stream obtaining unit 801, configured to obtain a video stream through a network and send the obtained video stream to an indication information obtaining unit 802;
the indication information obtaining unit 802, configured to receive the video stream sent by the video stream obtaining unit 801, perform a deep packet inspection on the video stream, obtain data of a group of pictures and indication information corresponding to the data of the group of pictures, and send the obtained indication information to a priority obtaining unit 803;
the priority obtaining unit 803, configured to receive the indication information sent by the indication information obtaining unit 802, obtain a priority of each data frame in the data of the group of pictures in the indication information, and send the priority of each data frame to a data frame sending unit 804; and
the data frame sending unit 804, configured to receive the priority of each data frame sent by the priority obtaining unit 803, and send the data frame in the data of the group of pictures of the video stream according to an order of the priority.

The foregoing video data transmission coding apparatus is configured to implement the video data transmission method of the embodiment in FIG. 5, the units included are classified based only on function logic, and the classification is not limited to the foregoing classification and is acceptable as long as corresponding functions can be implemented; additionally, specific names of functional units are only for easy differentiation from each other, but are not intended to limit the protection scope of the present invention.

FIG. 9 is a schematic structural diagram of a video data transmission apparatus provided by an embodiment of the present invention, the apparatus may be a computer or a handheld terminal, and as shown in the figure, the terminal includes:
a receiving unit 901, configured to receive a video stream sent by the receiving unit, perform a deep inspection on the received video stream to obtain indication information, and send the indication information to an inspection unit 902;
the inspection unit 902, configured to perform a deep inspection on the received video stream, and obtain indication information;
an obtaining unit 903, configured to receive the indication information sent by the inspection unit 902, learn a data amount and a priority of each video data packet in the video stream based on the obtained indication information, and send the data amount and the priority of each video data packet to a request unit 904; and
the request unit 904, configured to receive the data amount and the priority of each video data packet sent by the obtaining unit 903, and send a resource request to a base station according to a current downlink channel resource and the size of the video data packet.

The foregoing video data transmission apparatus is configured to implement the video data transmission method of the embodiment in FIG. 6, the units included are classified based only on function logic, and the classification is not limited to the foregoing classification and is acceptable as long as corresponding functions can be implemented; additionally, specific names of functional units are only for easy differentiation from each other, but are not intended to limit the protection scope of the present invention.

Finally, it should be pointed out that, the present invention uses the video transmission data as an example, and provides a coding method that can reduce the inspection complexity; the embodiments of the present invention can also be applied in the audio data coding and transmission field, where persons skilled in the art should easily apply the coding method and the data transmission method provided by the present invention to the audio data transmission field; therefore, the audio data transmission adopting the method provided by the present invention shall also fall within the protection scope of the present invention.

Persons skilled in the art should be able to further realize that, in combination with the examples described in the embodiments disclosed in this specification, units and steps of the algorithm may be implemented by electronic hardware, computer software, or a combination thereof. In order to clearly describe the interchangeability between the hardware and the software, the foregoing has generally described compositions and steps of every embodiment according to functions. Whether the functions are executed by hardware or software depends on particular applications and design constraint conditions of the technical solutions. Persons skilled in the art may use different methods to implement the described functions for each particular application, but it should not be considered that the implementation goes beyond the scope of the present invention.

In combination with the embodiments disclosed in this specification, steps of the method or algorithm may be implemented by hardware, a software module executed by a processor, or a combination thereof. The software module can be placed in a random access memory (RAM), a memory, a read-only memory (ROM), an electrically programmable ROM, an electrically erasable programmable ROM, a register, a hard disk, a removable magnetic disk, a CD-ROM, or any storage medium of other forms well-known in the technical field.

The objectives, technical solutions, and beneficial effects of the present invention have been described in further detail through the above specific embodiments. It should be understood that the above descriptions are merely specific embodiments of the present invention, but not intended to limit the protection scope of the present invention. Any modification, equivalent replacement, or improvement made without departing from the principle of the present invention shall fall within the protection scope of the present invention.

## Claims

1. A video data coding method, comprising:
obtaining (S201) video information; and
coding (S202) the video information into a video stream, wherein the video stream comprises data of a group of pictures;
setting (S203) indication information for the data of the group of pictures,
**characterized in that** the method further comprises putting the indication information of multiple groups of pictures in one indication information packet before the corresponding data of the group of pictures, wherein the indication information is used to indicate a priority and a data amount of each data frame in the corresponding data of the group of pictures.

2. The method according to claim 1, wherein the indication information comprises an indication information packet header, a field bit for indicating the priority of the data frame, and a field bit for indicating the data amount of the data frame.

3. The method according to claim 2, wherein the field bit for indicating the priority is a frame coding type field bit, a priority field bit, or a layered information field bit.

4. The method according to any one of claims 1 to 3, wherein the indication information comprises the priority and data amount of each data frame in the corresponding data of group of pictures and a law of change of a priority and a data amount of each data frame in data of subsequent multiple groups of pictures.

5. A video data transmission method, comprising:
obtaining (S501) a video stream;
performing (S502) a deep packet inspection on the video stream, and obtaining data of a group of pictures and indication information corresponding to the data of the group of pictures; and
sending (S504) the data frame in the data of the group of pictures of the video stream according to an order of the priority;
**characterized in that** the indication information of multiple groups of pictures is contained in one indication information packet before the corresponding data of the group of pictures in the video stream
and the method further comprises obtaining (S503) the priority and a size of each data frame in the data of the group of pictures from the indication information.

6. The video data transmission method according to claim 5, wherein after the obtaining a priority of each data frame in the data of the group of pictures from the indication information, the method further comprises:
obtaining a law of change of the priority and a size of each data frame in data of different groups of pictures from the indication information.

7. The method according to claim 5 or 6, wherein data of a single group of pictures among the data of the multiple groups of pictures further comprises multiple RTP packets, and each RTP packet further comprises multiple IP packets; and
after the obtaining the indication information and the data of the multiple groups of pictures, the method further comprises:
sorting the multiple IP packets again according to sequence numbers in packet headers of the RTP packets.

8. A video data transmission method, comprising:
receiving (S601) a video stream through a downlink channel; and
performing (S602) a deep packet inspection on the received video stream and obtaining indication information;
**characterized by**
learning (S603) a data amount and a priority of each video data packet in the video stream based on the obtained indication information; and
sending (S604) a resource request to a base station according to a current downlink channel resource and the data amount of the video data packet;
wherein the indication information of multiple groups of pictures is contained in one indication information packet before the corresponding data of the group of pictures in the video stream.

9. The method according to claim 8, wherein the sending a resource request to a base station further comprises:
requesting the base station to send the video data packet according to an order of the priority in the indication information.

10. A video coding apparatus, comprising:
an obtaining unit (701), configured to obtain video information and send the obtained video information to a coding unit;
the coding unit (702), configured to receive the video information obtained by the obtaining unit, code the video information into a video stream, and send the video stream to an inserting unit, wherein the video stream comprises data of multiple groups of pictures; and
the inserting unit (703), configured to receive the video stream sent by the coding unit, set indication information for the data of the group of pictures in the video stream, and put the indication information before the corresponding data of the group of pictures,
**characterized in that** the indication information of multiple groups of pictures is contained in one indication information packet in the video stream and the indication information is used to indicate a priority and a data amount of each data frame in the corresponding data of the group of pictures.

11. The apparatus according to claim 10, wherein the indication information set by the inserting unit comprises an indication information packet header, a field bit for indicating the priority of the data frame, and a field bit for indicating the data amount of the data frame.

12. The apparatus according to claim 11, wherein the field bit for indicating the priority is a frame coding type field bit, a priority field bit, or a layered information field bit.

13. A video data transmission apparatus, comprising:
a video stream obtaining unit (801), configured to obtain a video stream through a network and send the obtained video stream to an indication information obtaining unit;
the indication information obtaining unit (802), configured to receive the video stream sent by the video stream obtaining unit, perform a deep packet inspection on the video stream, obtain data of a group of pictures and indication information corresponding to the data of the group of pictures, and send the obtained indication information to a priority obtaining unit;
the priority obtaining unit (803), configured to receive the indication information sent by the indication information obtaining unit, and send a priority of each data frame to a data frame sending unit; and
the data frame sending unit (804), configured to receive the priority of each data frame sent by the priority obtaining unit, and send the data frame in the data of the group of pictures of the video stream according to an order of the priority
**characterized in that**
the indication information of multiple groups of pictures is contained in one indication information packet before the corresponding data of the group of pictures in the video stream, the indication information is used to indicate a priority and a data amount of each data frame in the corresponding data of the group of pictures and the priority obtaining unit is configured to obtain the priority of each data frame in the data of the group of pictures from the indication information.

14. The apparatus according to claim 13, wherein data of a single group of pictures among data of multiple groups of pictures further comprises multiple RTP packets, each RTP packet further comprises multiple IP packets, and the apparatus further comprises:
a sorting unit, configured to sort the multiple IP packets again according to sequence numbers in packet headers of the RTP packets.

15. A video data transmission apparatus, comprising:
a receiving unit (901), configured to receive a video stream through a downlink channel and send the video stream to an inspection unit; the inspection unit (902), configured to receive the video stream sent by the receiving unit, perform a deep inspection on the received video stream to obtain indication information, and send the indication information to an obtaining unit; and
the obtaining unit (903), configured to receive the indication information sent by the inspection unit, and send a data amount and a priority of each video data packet to a request unit;
**characterized in that**
the obtaining unit (903) is configured to learn a data amount and the priority of each video data packet in the video stream based on the obtained indication information;
the request unit (904) is configured to receive the data amount and the priority of each video data packet sent by the obtaining unit and to send a resource request to a base station according to a current downlink channel resource and the size of the video data packet; and
the indication information of multiple groups of pictures is contained in one indication information packet before the corresponding data of the group of pictures in the video stream.

## Patentansprüche

1. Videodaten-Codierverfahren, umfassend:
Erhalten (S201) von Videoinformationen; und
Codieren (S202) der Videoinformationen in einen Videostrom, wobei der Videostrom Daten einer Gruppe von Bildern umfasst;
Einstellen (S203) von Anzeigeinformationen für die Daten der Gruppe von Bildern;
**dadurch gekennzeichnet, dass** das Verfahren ferner umfasst: Einfügen der Anzeigeinformationen mehrerer Gruppen von Bildern in ein Anzeigeinformationspaket vor den entsprechenden Daten der Gruppe von Bildern, wobei die Anzeigeinformationen verwendet werden, um eine Priorität und eine Datenmenge jedes Datenrahmens in den entsprechenden Daten der Gruppe von Bildern anzuzeigen.

2. Verfahren nach Anspruch 1, wobei die Anzeigeinformationen einen Anzeigeinformationspaket-"Header", ein Feldbit zum Anzeigen der Priorität des Datenrahmens und ein Feldbit zum Anzeigen der Datenmenge des Datenrahmens umfassen.

3. Verfahren nach Anspruch 2, wobei das Feldbit zum Anzeigen der Priorität ein Feldbit des Rahmencodierungstyps, ein Prioritätsfeldbit oder ein geschichtetes Informationsfeldbit ist.

4. Verfahren nach einem der Ansprüche 1 bis 3, wobei die Anzeigeinformationen die Priorität und die Datenmenge jedes Datenrahmens in den entsprechenden Daten einer Gruppe von Bildern und ein Änderungsgesetz einer Priorität und einer Datenmenge jedes Datenrahmens in Daten mehrerer nachfolgender Gruppen von Bildern umfassen.

5. Videodaten-Übertragungsverfahren, umfassend:
Erhalten (S501) eines Videostroms;
Vornehmen (S502) einer "Deep Packet Inspection" an dem Videostrom, und Erhalten von Daten einer Gruppe von Bildern und Anzeigeinformationen, die den Daten der Gruppe von Bildern entsprechen; und
Senden (S504) des Datenrahmens in den Daten der Gruppe von Bildern des Videostroms gemäß einer Reihenfolge der Priorität;
**dadurch gekennzeichnet, dass** die Anzeigeinformationen mehrerer Gruppen von Bildern in einem Anzeigeinformationspaket vor den entsprechenden Daten der Gruppe von Bildern in dem Videostrom enthalten sind,
und das Verfahren ferner umfasst: Erhalten (S503) der Priorität und einer Größe jedes Datenrahmens in den Daten der Gruppe von Bildern aus den Anzeigeinformationen.

6. Videodaten-Übertragungsverfahren nach Anspruch 5, wobei, nach dem Erhalten einer Priorität jedes Datenrahmens in den Daten der Gruppe von Bildern aus den Anzeigeinformationen, das Verfahren ferner umfasst:
Erhalten eines Änderungsgesetzes der Priorität und einer Größe jedes Datenrahmens in Daten verschiedener Gruppen von Bildern aus den Anzeigeinformationen.

7. Verfahren nach Anspruch 5 oder 6, wobei Daten einer einzelnen Gruppe von Bildern unter den Daten der mehreren Gruppen von Bildern ferner mehrere RTP-Pakete umfassen, und jedes RTP-Paket ferner mehrere IP-Pakete umfasst; und
nach dem Erhalten der Anzeigeinformationen und der Daten mehrerer Gruppen von Bildern, das Verfahren ferner umfasst:
Sortieren der mehreren IP-Pakete erneut gemäß Sequenznummern in Paket-"Headern" der RTP-Pakete.

8. Videodaten-Übertragungsverfahren, umfassend:
Empfangen (S601) eines Videostroms durch einen "Downlink"-Kanal; und
Vornehmen (S602) einer "Deep Packet Inspection" an dem empfangenen Videostrom und Erhalten von Anzeigeinformationen;
**gekennzeichnet durch**:
Lernen (S603) einer Datenmenge und einer Priorität jedes Videodatenpakets in dem Videostrom auf der Basis der erhaltenen Anzeigeinformationen; und
Senden (S604) einer Ressourcenanforderung an eine Basisstation gemäß einer aktuellen "Downlink"-Kanalressource und der Datenmenge des Videodatenpakets;
wobei die Anzeigeinformationen mehrerer Gruppen von Bildern in einem Anzeigeinformationspaket vor den entsprechenden Daten der Gruppe von Bildern in dem Videostrom enthalten sind.

9. Verfahren nach Anspruch 8, wobei das Senden einer Ressourcenanforderung an eine Basisstation ferner umfasst:
Anfordern von der Basisstation, das Videodatenpaket gemäß einer Reihenfolge der Priorität in den Anzeigeinformationen zu senden.

10. Videocodiervorrichtung, umfassend:
eine Erhaltungseinheit (701), die ausgelegt ist, Videoinformationen zu erhalten und die erhaltenen Videoinformationen an eine Codiereinheit zu senden;
die Codiereinheit (702), die ausgelegt ist, die von der Erhaltungseinheit erhaltenen Videoinformationen zu empfangen, die Videoinformationen in einen Videostrom zu codieren, und den Videostrom an eine Einfügungseinheit zu senden, wobei der Videostrom Daten mehrerer Gruppen von Bildern umfasst; und
die Einfügungseinheit (703), die ausgelegt ist, den von der Codiereinheit gesendeten Videostrom zu empfangen, Anzeigeinformationen für die Daten der Gruppe von Bildern in dem Videostrom einzustellen, und die Anzeigeinformationen vor den entsprechenden Daten der Gruppe von Bildern einzufügen;
**dadurch gekennzeichnet, dass** die Anzeigeinformationen mehrerer Gruppen von Bildern in einem Anzeigeinformationspaket in dem Videostrom enthalten sind und die Anzeigeinformationen verwendet werden, um eine Priorität und eine Datenmenge jedes Datenrahmens in den entsprechenden Daten der Gruppe von Bildern anzuzeigen.

11. Vorrichtung nach Anspruch 10, wobei die von der Einfügungseinheit eingestellten Anzeigeinformationen einen Anzeigeinformationspaket-"Header", ein Feldbit zum Anzeigen der Priorität des Datenrahmens und ein Feldbit zum Anzeigen der Datenmenge des Datenrahmens umfassen.

12. Vorrichtung nach Anspruch 11, wobei das Feldbit zum Anzeigen der Priorität ein Feldbit des Rahmencodierungstyps, ein Prioritätsfeldbit oder ein geschichtetes Informationsfeldbit ist.

13. Videodaten-Übertragungsvorrichtung, umfassend:
eine Videostrom-Erhaltungseinheit (801), die ausgelegt ist, einen Videostrom durch ein Netz zu erhalten und den erhaltenen Video strom an eine Anzeigeinformationen-Erhaltungseinheit zu senden;
die Anzeigeinformationen-Erhaltungseinheit (802), die ausgelegt ist, den von der Videostrom-Erhaltungseinheit gesendeten Videostrom zu empfangen, eine "Deep Packet Inspection" an dem Videostrom vorzunehmen, Daten einer Gruppe von Bildern und Anzeigeinformationen, die den Daten der Gruppe von Bildern entsprechen, zu erhalten, und die erhaltenen Anzeigeinformationen an eine Prioritätserhaltungseinheit zu senden; und
die Prioritätserhaltungseinheit (803), die ausgelegt ist, die von der Anzeigeinformationen-Erhaltungseinheit gesendeten Anzeigeinformationen zu empfangen, und eine Priorität jedes Datenrahmens an eine Datenrahmen-Sendeeinheit zu senden; und
die Datenrahmen-Sendeeinheit (804), die ausgelegt ist, die Priorität jedes von der Prioritätserhaltungseinheit gesendeten Rahmens zu empfangen, und den Datenrahmen in den Daten der Gruppe von Bildern des Videostroms gemäß einer Reihenfolge der Priorität zu senden;
**dadurch gekennzeichnet, dass**:
die Anzeigeinformationen mehrerer Gruppen von Bildern in einem Anzeigeinformationspaket vor den entsprechenden Daten der Gruppe von Bildern in dem Videostrom enthalten sind, wobei die Anzeigeinformationen verwendet werden, um eine Priorität und eine Datenmenge jedes Datenrahmens in den entsprechenden Daten der Gruppe von Bildern anzuzeigen, und die Prioritätserhaltungseinheit ausgelegt ist, die Priorität jedes Datenrahmens in den Daten der Gruppe von Bildern aus den Anzeigeinformationen zu erhalten.

14. Vorrichtung nach Anspruch 13, wobei Daten einer einzelnen Gruppe von Bildern unter Daten mehrerer Gruppen von Bildern ferner mehrere RTP-Pakete umfassen, und jedes RTP-Paket ferner mehrere IP-Pakete umfasst; und die Vorrichtung ferner umfasst:
eine Sortiereinheit, die ausgelegt ist, die mehreren IP-Pakete erneut gemäß Sequenznummern in Paket-"Headern" der RTP-Pakete zu sortieren.

15. Videodaten-Übertragungsvorrichtung, umfassend:
eine Empfangseinheit (901), die ausgelegt ist, einen Videostrom durch einen "Downlink"-Kanal zu empfangen, und den Videostrom an eine Inspektionseinheit zu senden; die Inspektionseinheit (902), die ausgelegt ist, den von der Empfangseinheit gesendeten Videostrom zu empfangen, eine "Deep Inspection" an dem empfangenen Videostrom vorzunehmen, um Anzeigeinformationen zu erhalten, und die Anzeigeinformationen an eine Erhaltungseinheit zu senden; und
die Erhaltungseinheit (903), die ausgelegt ist, die von der Inspektionseinheit gesendeten Anzeigeinformationen zu empfangen, und eine Datenmenge und eine Priorität jedes Videodatenpakets an eine Anforderungseinheit zu senden;
**dadurch gekennzeichnet, dass**:
die Erhaltungseinheit (903) ausgelegt ist, eine Datenmenge und die Priorität jedes Videodatenpakets in dem Videostrom auf der Basis der erhaltenen Anzeigeinformationen zu lernen;
die Anforderungseinheit (904) ausgelegt ist, die Datenmenge und die Priorität jedes von der Erhaltungseinheit gesendeten Videodatenpakets zu empfangen, und eine Ressourcenanforderung an eine Basisstation gemäß einer aktuellen "Downlink"-Kanalressource und der Größe des Videodatenpakets zu senden; und
die Anzeigeinformationen mehrerer Gruppen von Bildern in einem Anzeigeinformationspaket vor den entsprechenden Daten der Gruppe von Bildern in dem Videostrom enthalten sind.

## Revendications

1. Procédé de codage de données vidéo, comprenant :
l'obtention (S201) d'informations vidéo ; et
le codage (S202) des informations vidéo en un flux vidéo, le flux vidéo comprenant des données d'un groupe d'images ;
le paramétrage (S203) d'informations d'indication pour les données du groupe d'images,
**caractérisé en ce que** le procédé comprend en outre le placement des informations d'indication de multiples groupes d'images dans un paquet d'informations d'indication avant les données correspondantes du groupe d'images, les informations d'indication étant utilisées pour indiquer une priorité et une quantité de données de chaque trame de données dans les données correspondantes du groupe d'images.

2. Procédé selon la revendication 1, dans lequel les informations d'indication comprennent un en-tête de paquet d'informations d'indication, un bit de champ pour indiquer la priorité de la trame de données, et un bit de champ pour indiquer la quantité de données de la trame de données.

3. Procédé selon la revendication 2, dans lequel le bit de champ pour indiquer la priorité est un bit de champ de type codage de trame, un bit de champ de priorité, ou un bit de champ d'informations en couches.

4. Procédé selon l'une quelconque des revendications 1 à 3, dans lequel les informations d'indication comprennent la priorité et la quantité de données de chaque trame de données dans les données correspondantes du groupe d'images et une loi de changement d'une priorité et d'une quantité de données de chaque trame de données dans des données de multiples groupes d'images consécutifs.

5. Procédé de transmission de données vidéo, comprenant :
l'obtention (S501) d'un flux vidéo ;
la réalisation (S502) d'une inspection profonde de paquets sur le flux vidéo, et
l'obtention de données d'un groupe d'images et d'informations d'indication correspondant aux données du groupe d'images ; et
l'envoi (S504) de la trame de données dans les données du groupe d'images du flux vidéo en fonction d'un ordre de la priorité ;
**caractérisé en ce que** les informations d'indication de multiples groupes d'images sont contenues dans un paquet d'informations d'indication avant les données correspondantes du groupe d'images dans le flux vidéo
et le procédé comprend en outre l'obtention (S503) de la priorité et d'une taille de chaque trame de données dans les données du groupe d'images à partir des informations d'indication.

6. Procédé de transmission de données vidéo selon la revendication 5, le procédé comprenant en outre, après l'obtention d'une priorité de chaque trame de données dans les données du groupe d'images à partir des informations d'indication :
l'obtention d'une loi de changement de la priorité et d'une taille de chaque trame de données dans des données de différents groupes d'images à partir des informations d'indication.

7. Procédé selon la revendication 5 ou 6, dans lequel des données d'un seul groupe d'images parmi les données des multiples groupes d'images comprennent en outre de multiples paquets RTP, et chaque paquet RTP comprend en outre de multiples paquets IP ; et
le procédé comprenant en outre, après l'obtention des informations d'indication et des données des multiples groupes d'images :
un nouveau tri des multiples paquets IP en fonction de numéros de séquence dans des en-têtes de paquet des paquets RTP.

8. Procédé de transmission de données vidéo, comprenant :
la réception (S601) d'un flux vidéo par un canal de liaison descendante ; et
la réalisation (S602) d'une inspection profonde de paquets sur le flux vidéo reçu et
l'obtention d'informations d'indication ;
**caractérisé par**
la détermination (S603) d'une quantité de données et d'une priorité de chaque paquet de données vidéo dans le flux vidéo sur la base des informations d'indication obtenues ; et
l'envoi (S604) d'une requête de ressource à une station de base en fonction d'une ressource de canal de liaison descendante en cours et de la quantité de données du paquet de données vidéo ;
dans lequel les informations d'indication de multiples groupes d'images sont contenues dans un paquet d'informations d'indication avant les données correspondantes du groupe d'images dans le flux vidéo.

9. Procédé selon la revendication 8, dans lequel l'envoi d'une requête de ressource à une station de base comprend en outre :
la demande à la station de base d'envoyer le paquet de données vidéo en fonction d'un ordre de la priorité des informations d'indication.

10. Appareil de codage vidéo, comprenant :
une unité d'obtention (701), configurée pour obtenir des informations vidéo et envoyer les informations vidéo obtenues à une unité de codage ;
l'unité de codage (702), configurée pour recevoir les informations vidéo obtenues par l'unité d'obtention, coder les informations vidéo en un flux vidéo, et envoyer le flux vidéo à une unité d'insertion, le flux vidéo comprenant des données de multiples groupes d'images ; et
l'unité d'insertion (703), configurée pour recevoir le flux vidéo envoyé par l'unité de codage, paramétrer des informations d'indication pour les données du groupe d'images dans le flux vidéo, et placer les informations d'indication avant les données correspondantes du groupe d'images,
**caractérisé en ce que** les informations d'indication de multiples groupes d'images sont contenues dans un paquet d'informations d'indication dans le flux vidéo et les informations d'indication sont utilisées pour indiquer une priorité et une quantité de données de chaque trame de données dans les données correspondantes du groupe d'images.

11. Appareil selon la revendication 10, dans lequel les informations d'indication paramétrées par l'unité d'insertion comprennent un en-tête de paquet d'informations d'indication, un bit de champ pour indiquer la priorité de la trame de données, et un bit de champ pour indiquer la quantité de données de la trame de données.

12. Appareil selon la revendication 11, dans lequel le bit de champ pour indiquer la priorité est un bit de champ de type codage de trame, un bit de champ de priorité, ou un bit de champ d'informations en couches.

13. Appareil de transmission de données vidéo, comprenant :
une unité d'obtention de flux vidéo (801), configurée pour obtenir un flux vidéo par le biais d'un réseau et envoyer le flux vidéo obtenu à une unité d'obtention d'informations d'indication ;
l'unité d'obtention d'informations d'indication (802), configurée pour recevoir le flux vidéo envoyé par l'unité d'obtention de flux vidéo, réaliser une inspection profonde de paquets sur le flux vidéo, obtenir des données d'un groupe d'images et des informations d'indication correspondant aux données du groupe d'images, et
envoyer les informations d'indication obtenues à une unité d'obtention de priorité ;
l'unité d'obtention de priorité (803), configurée pour recevoir les informations d'indication envoyées par l'unité d'obtention d'informations d'indication, et envoyer une priorité de chaque trame de données à une unité d'envoi de trame de données ; et
l'unité d'envoi de trame de données (804), configurée pour recevoir la priorité de chaque trame de données envoyée par l'unité d'obtention de priorité, et envoyer la trame de données dans les données du groupe d'images du flux vidéo en fonction d'un ordre de la priorité,
**caractérisé en ce que**
les informations d'indication de multiples groupes d'images sont contenues dans un paquet d'informations d'indication avant les données correspondantes du groupe d'images dans le flux vidéo, les informations d'indication sont utilisées pour indiquer une priorité et une quantité de données de chaque trame de données dans les données correspondantes du groupe d'images et l'unité d'obtention de priorité est configurée pour obtenir la priorité de chaque trame de données dans les données du groupe d'images à partir des informations d'indication.

14. Appareil selon la revendication 13, des données d'un seul groupe d'images parmi des données de multiples groupes d'images comprenant en outre de multiples paquets RTP, chaque paquet RTP comprenant en outre de multiples paquets IP, et l'appareil comprenant en outre :
une unité de tri, configurée pour trier à nouveau les multiples paquets IP en fonction de numéros de séquence dans des en-têtes de paquet des paquets RTP.

15. Appareil de transmission de données vidéo, comprenant :
une unité de réception (901), configurée pour recevoir un flux vidéo par le biais d'un canal de liaison descendante et envoyer le flux vidéo à une unité d'inspection ; l'unité d'inspection (902), configurée pour recevoir le flux vidéo envoyé par l'unité de réception, réaliser une inspection profonde sur le flux vidéo reçu pour obtenir des informations d'indication, et envoyer les informations d'indication à une unité d'obtention ; et
l'unité d'obtention (903), configurée pour recevoir les informations d'indication envoyées par l'unité d'inspection, et envoyer une quantité de données et une priorité de chaque paquet de données vidéo à une unité de requête ;
**caractérisé en ce que**
l'unité d'obtention (903) est configurée pour déterminer une quantité de données et la priorité de chaque paquet de données vidéo dans le flux vidéo sur la base des informations d'indication obtenues ;
l'unité de requête (904) est configurée pour recevoir la quantité de données et la priorité de chaque paquet de données vidéo envoyées par l'unité d'obtention et pour envoyer une requête de ressource à une station de base en fonction d'une ressource de canal de liaison descendante en cours et de la taille du paquet de données vidéo ; et
les informations d'indication de multiples groupes d'images sont contenues dans un paquet d'informations d'indication avant les données correspondantes du groupe d'images dans le flux vidéo.
